# EUROPEAN PATENT APPLICATION

(11) **EP 2 781 789 A1**
(43) Date of publication of application: **24.09.2014**
(21) Application number: 12849855.7
(22) Date of filing: 16.11.2012
(51) Int. Cl.: F16H 25/20, F16H 1/08, F16H 25/22

(54) **ELECTRICALLY POWERED LINEAR ACTUATOR**

(30) Priority: 16.11.2011 JP 2011250570
(71) Applicant: NTN Corporation, Osaka-shi, Osaka 550-0003 (JP)
(72) Inventor: IKEDA, Yoshinori, Iwata-shi Shizuoka 438-8510 (JP)
(74) Representative: Cohausz & Florack
(86) International application number: PCT/JP2012/079864
(87) International publication number: WO 2013/073692

(57) **Abstract**

An object of the present invention is to provide an electric linear actuator having high rotational performance which can prevent the operation lock of the ball screw and can be manufactured at a low cost. According to the present invention, there is provided an electric linear actuator comprising a housing; an electric motor mounted on the housing; a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably characterized in that an output gear forming part of the speed reduction mechanism is secured on the nut; and that the bearings are arranged at either side of the output gear and mounted on the housing via a washer formed of ring-shaped elastic member.

## Description

### Field of the Invention

The present invention relates to an electric actuator provided with a ball screw mechanism used in motors in general industries and driving sections of automobiles etc., and more particularly to an electric actuator used in a transmission or a parking brake for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting the rotary motion of an electric motor to the axial linear motion in an electric linear actuator used in various kinds of driving sections. These motion converting mechanisms involve sliding contact portions and thus power loss is increased and accordingly increase of sizes of electric motors and power consumption are obliged. Accordingly, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a thrust load is applied to the output member, and accordingly it is necessary to hold the position of the output member when the electric motor is stopped.

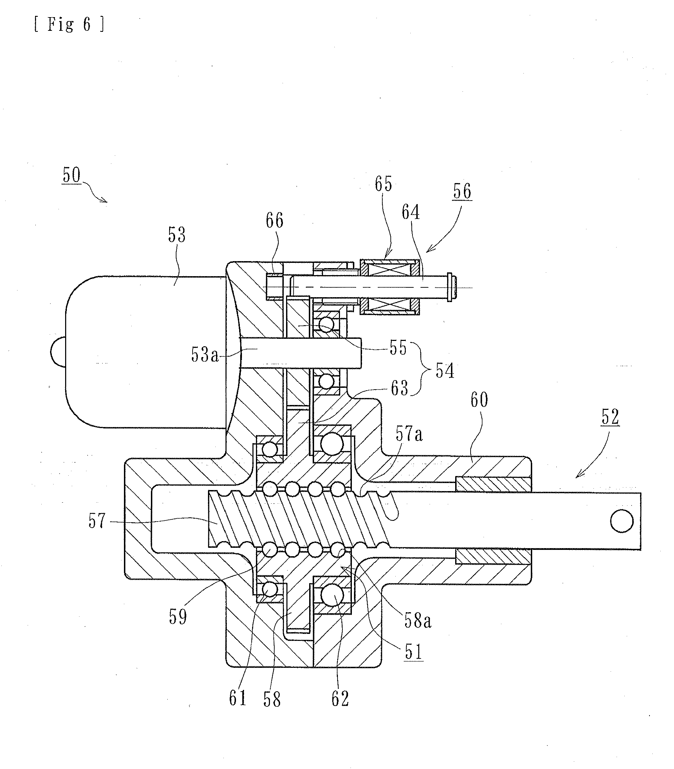

Accordingly, it has been developed an electric linear actuator in which a brake means is arranged for an electric motor or a low efficient means such as a worm gear is provided as a power transmitting means. In Fig. 6, one representative example of them is shown and it comprises an actuator main body 52 having a ball screw 51 for converting the rotational motion to the linear motion, a speed reduction mechanism 54 for transmitting the rotational motion of an electric motor 53 to the actuator main body 52 with reducing the rotational speed of the motor 53, and a position holding mechanism 56 for holding the position of the actuator main body 52 through its engagement with a first gear 55 forming part of the speed reduction mechanism 54.

The ball screw 51 comprises a screw shaft 57 acting as an output shaft formed with a helical screw groove 57a on its outer circumference, a nut 58 fitted on the screw shaft 57 and formed with a helical screw groove 58a on its inner circumference, and a number of balls 59 rollably contained in a rolling path formed by the opposite screw grooves 57a, 58a.

The actuator main body 52 comprises the nut 58 rotationally supported on the inner circumference of a housing 60 by a pair of ball bearings 61, 62, and the screw shaft 57 supported axially movably but not rotationally relative to the housing 60. Thus, the rotational motion of the nut 58 driven by the speedreduction mechanism 54 can be converted to the linear motion of the screw shaft 57.

The speed reduction mechanism 54 comprises the first gear 55 formed as a small spur gear fitted on a motor shaft 53a of the electric motor 53, and a second gear 63 mating with the first gear 55 and formed integrally with the nut 58 as a large spur gear.

The position holding mechanism 56 comprises a shaft 64 functioning as a locking member and adapted to be engaged with the first gear 55, and a solenoid 65 functioning as a driving means for engaging and disengaging the shaft 64 with the first gear 55. The shaft 64 has a rod-like configuration and is linearly driven by the solenoid 65 so that its tip end can be received in a recess 66. Since rotation of first gear 55 can be prevented by the shaft 64 due to engagement of the shaft 64 with the first gear 55 by controlling the solenoid 65, it is possible to stably hold the position of the screw shaft 57 of the actuator main body 52 (see e.g. Patent Document 1 below).

### Document of the Prior Art

### Patent Document

Patent Document 1: JP 2009 -156416 A

### Disclosure of the Invention

### Problems to be solved by the Invention

In the electric linear actuator 50 of the prior art, since the rotation of first gear 55 can be firmly prevented by the shaft 64 due to engagement of the shaft 64 with the first gear 55 by controlling the solenoid 65, it is possible to stably hold the position of the screw shaft 57 of the actuator main body 52 without causing any slippage between engaging surfaces.

However, it is afraid that the control of the electric linear actuator 50 would be impossible in a case of power deficiency due to voltage drop of a battery. Under the circumstances, the nut 58 would be reversely rotated and continue the reverse rotation due to its inertia moment when a thrust load is applied to the screw shaft 57. As the result, it is afraid that the tip end of the screw shaft 57 would be abutted against an inner wall surface of the housing 60 and thus cause locking of operation (operation lock) which would disable return of the screw shaft 57 by the electric motor 53 itself.

In addition, the nut 58 would be urged toward the right-hand direction by a reaction force (inverse thrust load) applied to the nut 58 by the screw shaft 57 when the tip end of the screw shaft 57 is abutted against an inner wall of the housing 60 and thus the ball bearing 62 of the paired ball bearings 61, 62 would be also urged against the opposite inner wall of the housing 60. Accordingly, this sometimes causes the locking in operation of the linear actuator 50.

Furthermore, in the speed reduction mechanism 54 formed of single-gear combination of the first gear 55 of a spur gear of small diameter and of the second gear 63 of a spur gear of large diameter, it has been sometimes adopted a two-stage reduction mechanism by providing an intermediate shaft between the motor shaft 53a and the screw shaft 57 when a larger reduction ratio is required or when there is any limitation in layout. In this case, there are problems of increases of costs in machining and increase of number and weight of parts. Accordingly, it has been desired an intermediate shaft structure which has excellent rotational performance and can suppress the problems above minimum.

It is, therefore, an object of the present invention to provide an electric linear actuator having high rotational performance which can prevent the operation lock of the ball screw and can be manufactured at a low cost

### Means for solving the Problems

For achieving the object of the present invention, there is provided according to the present invention of claim 1, an electric linear actuator comprising a housing; an electric motor mounted on the housing; a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably characterized in that an output gear forming part of the speed reduction mechanism is secured on the nut; and that the bearings are arranged at either side of the output gear and mounted on the housing via a washer formed of ring-shaped elastic member.

As defined in claim 1, since the electric linear actuator comprises a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably and is characterized in that an output gear forming part of the speed reduction mechanism is secured on the nut; and that the bearings are arranged at either side of the output gear and mounted on the housing via a washer formed of ring-shaped elastic member, it is possible to provide an electric linear actuator which can eliminate axial play of the supporting bearing and prevent induction of the locking in operation (operation lock) which would be caused by friction between the bearing and the inner wall surface of the housing due to presence of an elastic member (washer) therebetween functioning as a member for gradually absorbing inertia force of the nut even though a tip end of the screw shaft is abutted against the inner wall surface of the housing.

It is preferable as defined in claim 2 that an inner diameter of the washer is larger than an outer diameter of an inner ring of the bearings and the washer contacts only an outer ring of the bearing. This makes it possible to prevent increase of frictional force due to contact of the inner ring of the bearing with the housing and thus to surely prevent the operation lock even though the nut is urged toward the housing by an inverse thrust load applied to the driving shaft because of formation of axial gap between the rotational inner ring of the bearing and the inner wall of the housing and thus of no interference therebetween.

It is also preferable as defined in claim 3 that the bearings are formed by a pair of bearings of same specifications which can bear both a thrust load from the driving shaft and a radial load applied via the output gear. This makes it possible to simplify confirming operation for preventing erroneous assembly of bearings and thus to improve workability in assembly.

It is preferable as defined in claim 4 that the housing comprises a first housing and a second housing arranged with its end face being abutted against the end face of the first housing, the electric motor being mounted on the first housing, and accommodating bores formed in the first and second housings respectively for accommodating the screw shaft, that the speed reduction mechanism comprises an input gear fitted on the motor shaft, an intermediate gear mating with the input gear, and an output gear mating with the intermediate gear and secured on the nut, and the intermediate gear is rotationally supported via a bearing on a shaft supported at its opposite ends on the first and second housings. This makes it possible to transmit the rotational force generated on the output gear by the screw groove of the ball screw toward a direction for relieving the rotational force and thus the locking of operation is also relieved due to the structure of the shaft freely rotationally supported by the bearing, although the supporting bearing of the first housing side is urged toward the second housing side due to reaction caused by abutment of the screw shaft against the wall surface of the housing and accordingly rotational force is caused on the output gear by the screw groove of the ball screw. Thus it is possible to provide a electric linear actuator of low manufacturing cost which can avoid the locking of operation and has excellent rotational performance. In addition, since bearings of standard design can be adopted in consideration of the load capacity, manufacturing cost can be suppressed without excessive increase of the number of components. Furthermore, since it is unnecessary to newly arrange both-side bearings for the intermediate gear by arranging a single bearing within the intermediate gear, it is possible to suitably and compactly bear a load applied on the intermediate gear without increase the axial dimension of the electric linear actuator.

It is also preferable as defined in claim 5 that one end of the shaft is press-fitted into the first or second housing and the other end of the shaft is loose-fitted into the second or first housing. This makes it possible to assure smooth rotational performance with allowing misalignment.

It is preferable as defined in claim 6 that the bearing of the intermediate gear structured as a needle roller bearing of a shell type comprising an outer ring press-formed of steel sheet and press-fitted into an inner circumference of the intermediate gear, and a plurality of needle rollers rollably contained in a cage. This makes it possible to use easily available popular needle roller bearings and thus to reduce its manufacturing cost.

It is preferable as defined in claim 7 that ring-shaped washers are arranged at either side of the intermediate gear, and that a face width of gear teeth of the intermediate gear is formed smaller than the whole axial width of the intermediate gear. This makes it possible to prevent the intermediate gear from being directly contacted with the housing and to reduce contacting area between the intermediate gear and the washers and thus to achieve smooth rotational performance with suppressing frictional resistance during rotation.

It is also preferable as defined in claim 8 that the washers are formed of steel sheet or as defined in claim 9 that the washers are formed of thermoplastic synthetic resin impregnated with a predetermined amount of fiber reinforcing material. This makes it possible to increase strength and anti-wear property of the washers and thus to improve durability thereof.

It is also preferable as defined in claim 10 that the bearing of the intermediate gear is formed of a sliding bearing which is structured as an oil impregnated bearing formed of porous metal added by graphite fine powder, and that a whole axial width of the sliding bearing is formed larger than the whole axial width of the intermediate gear. This makes it possible to prevent the intermediate gear from being contacted with the first and second housings and worn without mounting any washer, to achieve smooth rotational performance while suppressing frictional resistance during rotation of the intermediate gear, and to reduce the manufacturing cost with suppressing increase of the number of components.

### Effects of the Invention

According to the electric linear actuator of the present invention, since it comprises a housing; an electric motor mounted on the housing; a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably and is characterized in that an output gear forming part of the speed reduction mechanism is secured on the nut; and that the bearings are arranged at either side of the output gear and mounted on the housing via a washer formed of ring-shaped elastic member, it is possible to provide an electric linear actuator which can eliminate axial play of the supporting bearing and prevent induction of the locking in operation (operation lock) which would be caused by friction between the bearing and the inner wall surface of the housing due to presence of an elastic member (washer) therebetween functioning as a member for gradually absorbing inertia force of the nut even though a tip end of the screw shaft is abutted against the inner wall surface of the housing.

### Brief description of the Drawings

[Fig. 1] A longitudinal section view showing a first preferable embodiment of the electric linear actuator of the present invention;
[Fig. 2] A longitudinal section view showing an actuator main body of the electric linear actuator of Fig. 1;
[Fig. 3] A partially enlarged view showing an intermediate gear of the electric linear actuator of Fig. 1;
[Fig.4] A partially enlarged view showing a modification of the intermediate gear of Fig. 3;
[Fig. 5] A longitudinal section view showing a second preferable embodiment of the electric linear actuator of the present invention;
[Fig.6 ] A longitudinal section view showing an electric linear actuator of the prior art.

### Mode for carrying out the Invention

One mode for carrying out the present invention is an electric linear actuator comprising a housing of aluminum light alloy; an electric motor mounted on the housing; a speed reduction mechanism for transmitting the rotational power of the electric motor to a ball screw mechanism via a motor shaft with reducing a motor speed; and the ball screw mechanism for converting the rotational motion of the electric motor transmitted via the speed reduction mechanism to an axial linear motion of a driving shaft; the ball screw mechanism comprising a nut formed with a helical screw groove on its inner circumference and supported by bearings on the housing rotationally but axially immovably, and a screw shaft coaxially integrated with the driving shaft, formed with helical screw groove on its outer circumference corresponding to helical screw groove of the nut, adapted to be inserted into the nut via a large number of balls, and supported on the housing rotationally but axially immovably characterized in that an output gear forming part of the speed reduction mechanism is secured on the nut; that the bearings are formed by a pair of bearings of same specifications which can bear both a thrust load from the driving shaft and a radial load applied via the output gear, and the bearings are arranged at either side of the output gear and mounted on the housing via a washer formed of ring-shaped elastic member, and that an inner diameter of the washer is larger than an outer diameter of an inner ring of the bearings.

### First Embodiment

Preferable embodiments of the present invention will be hereinafter described with reference to the drawings.

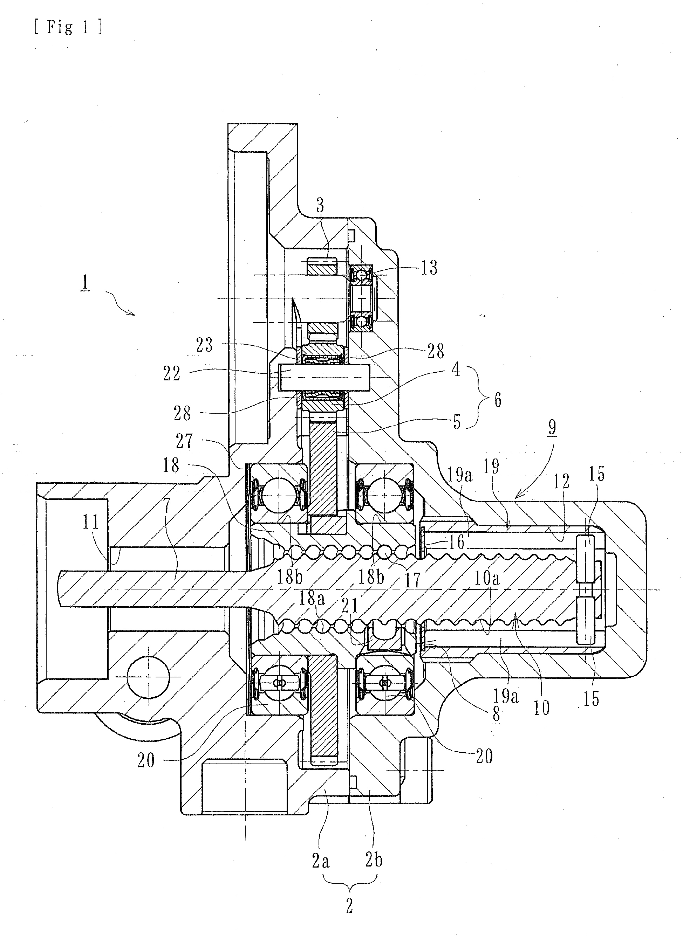

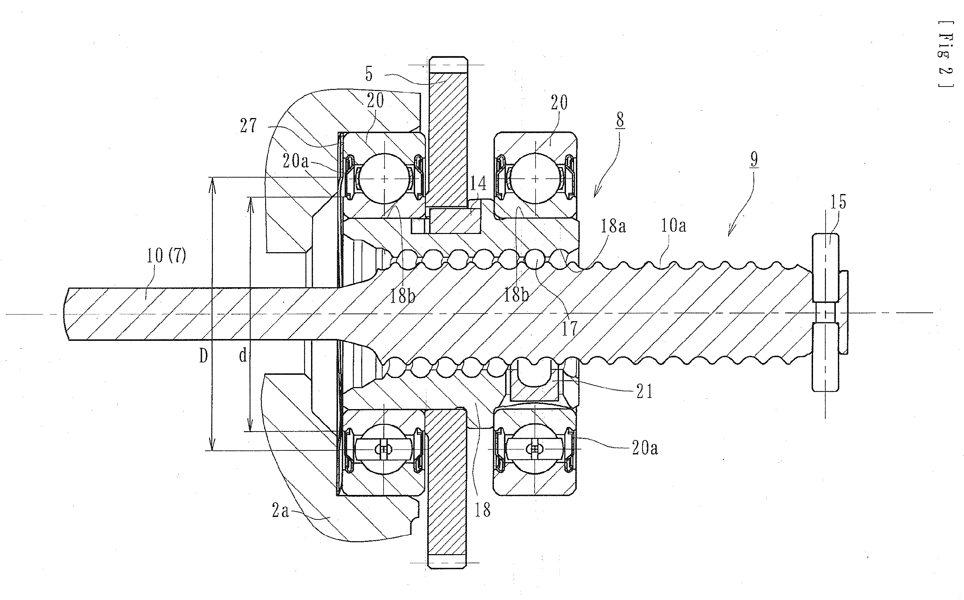

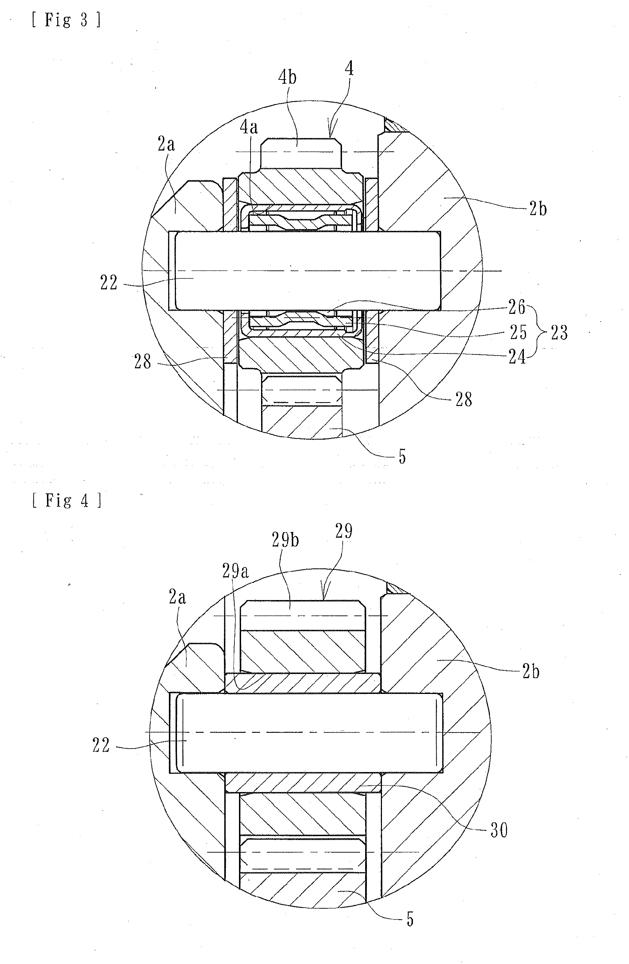

Fig. 1 is a longitudinal section view showing a first preferable embodiment of the electric linear actuator of the present invention, Fig. 2 is a longitudinal section view showing an actuator main body of the electric linear actuator of Fig. 1, Fig. 3 is a partially enlarged view showing an intermediate gear of the electric linear actuator of Fig. 1, and Fig.4 is a partially enlarged view showing a modification of the intermediate gear of Fig. 3.

As shown in Fig. 1, an electric linear actuator 1 comprises a housing 2 formed of aluminum light alloy, an electric motor mounted on the housing 2 (not shown), a speed reduction mechanism 6 including the intermediate gear 4 including an intermediate gear 4 mating with an input gear 3 mounted on a motor shaft (not shown) of the electric motor, and an output gear 5, a ball screw mechanism 8 for converting rotational motion of the electric motor to axial linear motion of a driving shaft 7 via the reduction mechanism 6, and an actuator main body 9 including the ball screw mechanism 8.

The housing 2 comprises a first housing 2a and a second housing 2b adapted to be assembled with being abutted and integrally secured each other by fastening bolts (not shown). The electric motor can be mounted on the first housing 2a and an accommodating bore (through bore) 11 and an accommodating bore (blind bore) 12 for accommodating a screw shaft 10 are formed respectively in the first and second housings 2a, 2b.

The input gear 3 is mounted on an end of the motor shaft and rotationally supported by a rolling bearing 13 formed of a deep groove ball bearing mounted on the second housing 2b. The output gear 5 mating with the intermediate gear 4 formed of a spur gear is integrally secured on a nut 18 forming the ball screw mechanism 8 via a key 14 (Fig. 2).

The driving shaft 7 is integrated with the screw shaft 10 forming the ball screw mechanism 8 and engaging pins 15, 15 are arranged at one end (right-side end in Fig. 1) of the driving shaft 7. These guide pins 15, 15 are adapted to be engaged with a stopper ring 16 to surely prevent the screw shaft 10 from falling out of the housing 2 and from being locked in operation with being abutted against the inner wall of the housing 2. A numeral 19 denotes a guide member mounted in the accommodating bore 12 of the housing 2b and formed with axially extending guiding grooves 19a, 19a being engaged with the guide pins 15, 15 to guide the screw shaft 10 axially movably but not rotationally.

As shown in the enlarged view of Fig. 2, the ball screw mechanism 8 comprises the screw shaft 10 and the nut 18 fitted on the screw shaft 10 via balls 17. The screw shaft 10 is formed on its outer circumference with a helical screw groove 10a and supported axially movably but not rotationally. On the other hand, the nut 18 is formed on its inner circumference with a helical screw groove 18a corresponding to the helical screw groove 10a of the screw shaft 10 and a number of balls 17 are rollably accommodated between these screw grooves 10a, 18a. The nut 18 is supported on the first and second housings 2a, 2b by two bearings 20, 20 rotationally but axially immovably relative to the housings 2a, 2b. A numeral 21 denotes a bridge member for continuously circulating balls 17 through the screw groove 18a of the nut 18.

The cross-sectional configuration of each screw groove 10a, 18a may be either one of circular-arc or Gothic-arc configuration. However, this embodiment adopts the Gothic-arc configuration since it can have a large contacting angle with the ball 17 and a small axial gap. This enables to have large rigidity against the axial load and to suppress generation of vibration.

The nut 18 is formed of case hardened steel such as SCM415 or SCM420 and its surface is hardened to HRC 55∼62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM415 or SCM420 and its surface is hardened to HRC 55∼62 by induction hardening or carburizing hardening.

The output gear 5 forming the reduction mechanism 6 is integrally secured on the outer circumference 18b of the nut 18 and two supporting bearings 20, 20 are press-fitted onto either side of the output gear 5 via a predetermined interface. This makes it possible to prevent generation of axial positional displacement between the supporting bearings 20, 20 and the output gear 5 even though a thrust load would be applied to them from the driving shaft 7. In addition, each of the supporting bearings 20, 20 is formed of the deep groove ball bearing of sealed type in which shield plates 20a, 20a are arranged on either side of the support bearing to prevent leakage of grease contained in the bearings and penetration of worn powder or debris into the bearings from outside.

According to this embodiment, since the bearings 20, 20 for rotationally supporting the nut 18 are formed by deep groove bearings of same specifications, it is possible to bear both a thrust load from the driving shaft 7 and a radial load applied via the output gear 5 and also possible to simplify confirming operation for preventing erroneous assembly of bearings 20. In addition, the outer circumferential configuration may be a straight cylinder without any step and thus it is possible to adopt a centerless grinding and to reduce machining steps. In this case, the term "bearings of same specifications" means bearings having same inner diameter, outer diameter, width, size and number of rolling elements, and internal clearance of bearing.

Also in this embodiment, one of the paired supporting bearings 20, 20 is mounted on the housing 2a via a washer 27 of a ring shaped elastic member. The washer 27 is a wave-washer press-formed of austenitic stainless steel sheet (SUS304 of JIS) having high strength and wear resistance or preservative cold rolled steel sheet (SPCC of JIS). An inner diameter "D" (Fig. 2) of the washer 27 is larger than an outer diameter "d" of an inner ring of the bearing 20. This makes it possible to eliminate axial play of the paired bearings 20, 20 and to obtain a smooth rotation of the screw shaft 10. Furthermore, since the washer 27 contacts only an outer ring of the bearing 20 and does not contact its inner ring functioning as a rotational ring and thus does not interfere therewith, it is possible to prevent increase of frictional force due to contact of the inner ring of the bearing with the housing 2a and thus to surely prevent generation of the operation lock even though the nut 18 is urged toward the housing 2a by an inverse thrust load applied to the driving shaft 7.

As shown in Fig. 3, the intermediate gear 4 is rotationally supported via a rolling bearing 23 on a shaft 22 supported at its opposite ends on the first and second housings 2a, 2b. A misalignment (assembling error) of the shaft 22 and the rolling bearing 23 can be allowed and smooth rotation of the intermediate gear 4 will be ensured for example by setting the end of the shaft 22 of second housing side via clearance fitting in case of setting the end of the shaft 22 of first housing side via press-fitting. In the embodiment illustrated in Fig. 3, the rolling bearing 23 is formed of a needle roller bearing of a shell type comprising an outer ring 24 press-formed of steel sheet and press-fitted into an inner circumference of the intermediate gear 4, and a plurality of needle rollers 26 rollably contained in a cage 25. This enables to adopt bearings of standard design of easy availability and thus to reduce manufacturing cost.

In addition, ring-shaped washers 28, 28 are arranged at either side of the intermediate gear 4 to prevent the intermediate gear 4 from being directly contacted with the first and second housings 2a, 2b. Furthermore, a face width 4b of gear teeth of the intermediate gear 4 is formed smaller than the whole axial width of the intermediate gear 4. This makes it possible to reduce contacting area between the intermediate gear 4 and the washers 28, 28 and thus to achieve smooth rotational performance with suppressing frictional resistance during rotation. The washers 28, 28 are flat washers press-formed of austenitic stainless steel sheet having high strength and wear resistance or preservative cold rolled steel sheet. Alternatively, the washers 28, 28 may be formed of brass, sintered metal or thermoplastic synthetic resin such as PA (polyamide) 66 etc. in which a predetermined amount of fiber reinforcing materials such as GF (glass fibers) etc. is impregnated.

In addition, an axial width of the bearing 23 of the intermediate gear 4 is set smaller than a whole axial width of the intermediate gear 4. This makes it possible to prevent the side surfaces of the bearing 23 from being worn and deformed and to obtain smooth rotational performance.

A modification of Fig. 3 is shown in Fig. 4. An intermediate gear 29 is rotationally supported via a sliding bearing 30 on the shaft 22 supported at its opposite ends on the first and second housings 2a, 2b. According to this modification, a face width 29b of gear teeth of the intermediate gear 29 is formed in same as the whole axial width of the intermediate gear 29 and the sliding bearing 30 is structured as an oil impregnated bearing (e.g. "BEARFIGHT" (registered trade mark of NTN Co.)) and press-fitted into the inner circumference 29a of the intermediate gear 29. A whole axial width of the sliding bearing 30 is formed larger than the whole axial width of the intermediate gear 29. This makes it possible to prevent the intermediate gear 29 from being contacted with the first and second housings 2a, 2b and worn without mounting any washer, to achieve smooth rotational performance with suppressing frictional resistance during rotation of the intermediate gear 29, and to reduce the

manufacturing cost with suppressing increase of the number of components. The sliding bearing 30 may be formed of thermoplastic polyimide resin enabling injection molding.

### Second Embodiment

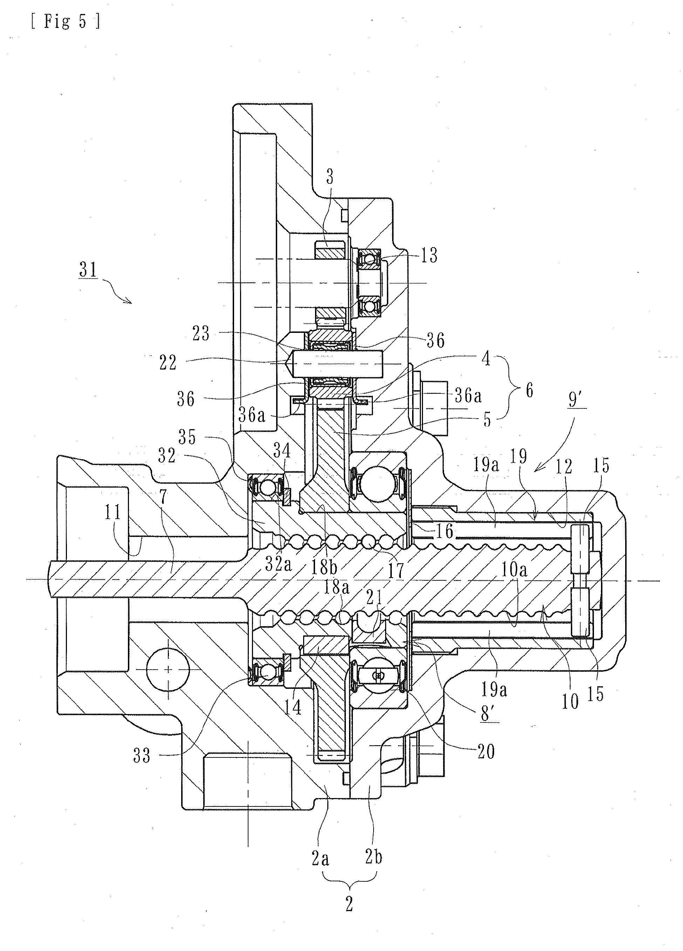

Fig. 5 is a longitudinal section view showing a second preferable embodiment of the electric linear actuator of the present invention. This embodiment is basically different from the first embodiment only in a structure of the supporting bearings and washers and accordingly same reference numerals as those used in the first embodiment are also used in this embodiment for designating parts or portions having same functions of those in the first embodiment.

An electric linear actuator 31 comprises a housing 2 formed of aluminum light alloy, an electric motor (not shown), an intermediate gear 4 mating with an input gear 3 mounted on a motor shaft (not shown) of the electric motor, a speed reduction mechanism 6 including the intermediate gear 4 and an output gear 5, a ball screw mechanism 8' for converting rotational motion of the electric motor to axial linear motion of a driving shaft 7 via the reduction mechanism 6, and an actuator main body 9' including the ball screw mechanism 8'.

The ball screw mechanism 8' comprises a screw shaft 10 and a nut 32 fitted on the screw shaft 10. The nut 32 is formed of case hardened steel such as SCM415 or SCM420 and supported on the first and second housings 2a, 2b by two bearings 33, 20 rotationally but axially immovably relative to the housings 2a, 2b.

The output gear 5 forming the reduction mechanism 6 is integrally secured on the outer circumference 18b of the nut 32 via a key 14 and two supporting bearings 33, 20 are press-fitted onto either side of the output gear 5 via a predetermined interface. One supporting bearing 33 arranged on the housing 2a of the two supporting bearings 33, 20 is a deep groove ball bearing of sealed type having a size smaller than that of the supporting bearing 20 arranged on the other housing 2b and secured on the outer circumference 32a of the nut 32 axially immovably by a stopper ring 34. This makes it possible to prevent generation of axial positional displacement between the supporting bearings 33, 20 and the output gear 5 even though a thrust load would be applied to them from the driving shaft 7.

Also in this embodiment, the supporting bearing 33 is mounted on the housing 2a via a washer 35 of a ring shaped configuration. The washer 35 is formed of elastic member (elastomer) such as synthetic rubber and an inner diameter of the washer 35 is larger than an outer diameter of an inner ring of the supporting bearing 33. This makes it possible to eliminate axial play of the paired bearings 33, 20 and to obtain a smooth rotation of the screw shaft 10. Similarly to the first embodiment, since the washer 35 contacts only an outer ring of the bearing 33 and does not contact its inner ring functioning as a rotational ring and thus does not interfere therewith, it is possible to prevent increase of frictional force due to contact of the inner ring of the bearing with the housing 2a and thus to surely prevent generation of the operation lock even though the nut 32 is urged toward the housing 2a by an inverse thrust load applied to the driving shaft 7.

In addition, the intermediate gear 4 is rotationally supported via a rolling bearing 23 on a shaft 22 supported at its opposite ends on the first and second housings 2a, 2b. Ring-shaped washers 36, 36 are arranged at either side of the intermediate gear 4 to prevent the intermediate gear 4 from being directly contacted with the first and second housings 2a, 2b. Furthermore, a face width 4b of gear teeth of the intermediate gear 4 is formed smaller than the whole axial width of the intermediate gear 4. This makes it possible to reduce contacting area between the intermediate gear 4 and the washers 36, 36 and thus to achieve smooth rotational performance with suppressing frictional resistance during rotation. The washers 28, 28 are flat washers press-formed of austenitic stainless steel sheet having high strength and wear resistance or preservative cold rolled steel sheet. The washers 36 may be press-formed of austenitic stainless steel sheet or preservative cold rolled steel sheet and each washer 36 has a substantially L-shaped cross-section and a flange portion 36a on its inner circumference. Accordingly, it is possible to prevent falling out of the washers 36 and improve workability in assembly by engaging the flange portions 36a with recessed portions formed in the first and second housings 2a, 2b.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### [Applicability in Industries]

The electric linear actuator of the present invention can be applied to electric actuators used in an electric motor for general industries and driving sections of an automobile etc. and having ball screw mechanism for converting the rotational input from an electric motor to the linear motion of a driving shaft.

### Explanation of Reference numerals

- 1, 31: electric linear actuator
- 2: housing
- 2a: first housing
- 2b: second housing
- 3: input gear
- 4, 29: intermediate gear
- 4a, 29a: inner circumference of intermediate gear
- 5: output gear
- 6: speed reduction mechanism
- 7: driving shaft
- 8, 8': ball screw mechanism
- 9, 9': actuator main body
- 10: screw shaft
- 10a, 18a: screw groove
- 11: accommodating bore (through bore)
- 12: accommodating bore (blind bore)
- 13, 23: rolling bearing
- 14: key
- 15: engaging pin
- 16, 34: stopper ring
- 17: ball
- 18, 32: nut
- 18b, 32a: outer circumference of nut
- 19: guiding member
- 19a: guiding groove
- 20, 33: supporting bearing
- 20a: shielding sheet
- 21: bridge member
- 22: shaft
- 24: outer ring
- 25: cage
- 26: needle roller
- 27, 28, 35, 36: washer
- 30: sliding bearing
- 36a: flange portion
- 50: electric linear actuator
- 51: ball screw
- 52: actuator main body
- 53: electric motor
- 54: speed reduction mechanism
- 55: first gear
- 56: position holding mechanism
- 57: screw shaft
- 57a, 58a: screw groove
- 58: nut
- 59: ball
- 60: housing
- 61, 62: ball bearing
- 63: second gear
- 64: shaft
- 65: solenoid
- 66: recess
- d: outer diameter of inner ring of supporting bearing
- D: inner diameter of washer

## Claims

1. An electric linear actuator (1, 31) comprising:
a housing (2);
an electric motor mounted on the housing (2);
a speed reduction mechanism (6) for transmitting the rotational power of the electric motor to a ball screw mechanism (8, 8') via a motor shaft with reducing a motor speed; and
the ball screw mechanism (8, 8') for converting the rotational motion of the electric motor transmitted via the speed reduction mechanism (6) to an axial linear motion of a driving shaft (7); the ball screw mechanism (8, 8') comprising a nut (18, 32) formed with a helical screw groove (18a) on its inner circumference and supported by bearings (20, 20; 33, 20) on the housing (2) rotationally but axially immovably, and a screw shaft (10) coaxially integrated with the driving shaft (7), formed with helical screw groove (10a) on its outer circumference corresponding to helical screw groove (18a) of the nut (18), adapted to be inserted into the nut (18) via a large number of balls (17), and supported on the housing (2) rotationally but axially immovably **characterized in:**
**that** an output gear (5) forming part of the speed reduction mechanism (6) is secured on the nut (18, 32); and
**that** the bearings (20, 20; 33, 20) are arranged at either side of the output gear (5) and mounted on the housing (2) via a washer (27, 35) formed of ring-shaped elastic member.

2. An electric linear actuator of claim 1 wherein an inner diameter of the washer (27, 35) is larger than an outer diameter of an inner ring of the bearings (20, 20; 33, 20).

3. An electric linear actuator of claim 1 or 2 wherein the bearings (20, 20) are formed by a pair of bearings of same specifications which can bear both a thrust load from the driving shaft (7) and a radial load applied via the output gear (5).

4. An electric linear actuator of claim 1 wherein the housing (2) comprises a first housing (2a) and a second housing (2b) arranged with its end face being abutted against the end face of the first housing (2a), the electric motor being mounted on the first housing (2a), and accommodating bores (11, 12) formed in the first and second housings (2a, 2b) respectively for accommodating the screw shaft (10), wherein the speed reduction mechanism (6) comprises an input gear (3) secured on the motor shaft, an intermediate gear (4, 29) mating with the input gear (3), and an output gear (5) mating with the intermediate gear (4, 29) and secured on the nut (18), and the intermediate gear (4, 29) is rotationally supported via a bearing (23, 30) on a shaft (22) supported at its opposite ends on the first and second housings (2a, 2b).

5. An electric linear actuator of claim 4 wherein one end of the shaft (22) is press-fitted into the first or second housing (2a or 2b) and the other end of the shaft (22) is loose-fitted into the second or first housing (2b or 2a).

6. An electric linear actuator of claim 4 wherein the bearing of the intermediate gear (4) structured as a needle roller bearing (23) of a shell type comprising an outer ring (24) press-formed of steel sheet and press-fitted into an inner circumference of the intermediate gear (4), and a plurality of needle rollers (26) rollably contained in a cage (25).

7. An electric linear actuator of claim 4 wherein ring-shaped washers (28, 28) are arranged at either side of the intermediate gear (4), and wherein a face width of gear teeth (4b) of the intermediate gear (4) is formed smaller than the whole axial width of the intermediate gear (4).

8. An electric linear actuator of claim 7 wherein the washers (28, 28) are formed of steel sheet.

9. An electric linear actuator of claim 7 wherein the washers (28, 28) are formed of thermoplastic synthetic resin impregnated with a predetermined amount of fiber reinforcing material.

10. An electric linear actuator of claim 4 wherein the bearing of the intermediate gear (29) is formed of a sliding bearing (30) which is structured as an oil impregnated bearing formed of porous metal added by graphite fine powder, and wherein a whole axial width of the sliding bearing (30) is formed larger than the whole axial width of the intermediate gear (29).
